# EUROPEAN PATENT SPECIFICATION

(11) **EP 1 457 413 B1**
(45) Date of publication and mention of the grant of the patent: **30.04.2008**
(21) Application number: 04005643.4
(22) Date of filing: 10.03.2004
(51) Int. Cl.: B62K 25/32

(54) **Motorcycle**
Motorrad
Motocyclette

(30) Priority: 12.03.2003 JP 2003066975
(43) Date of publication of application: 15.09.2004
(73) Proprietor: Yamaha Hatsudoki Kabushiki Kaisha, Iwata-shi, Shizuoka-ken (JP)
(72) Inventor: Suita, Yoshikazu, Iwata-shi Shizuoka-ken (JP)
(74) Representative: Grünecker, Kinkeldey, Stockmair & Schwanhäusser Anwaltssozietät

(56) References cited:
- US-A- 4 324 306
- US-A- 4 392 542
- PATENT ABSTRACTS OF JAPAN vol. 2000, no. 25, 12 April 2001 (2001-04-12) & JP 2001 213379 A (HONDA MOTOR CO LTD), 7 August 2001 (2001-08-07)

## Description

The present invention relates to a motorcycle having a unit-swing-type power unit swingably supported at its front portion by a vehicle frame, said motorcycle comprising at least a vehicle-body-side shaft supported on the side of said vehicle frame, an engine-side shaft supported on said unit-swing-type power unit, and an engine-side suspension linkage for linking said at least one vehicle-body-side shaft and said engine-side shaft.

Such a motorcycle having a unit-swing-type power unit swingably supported by a vehicle frame is, e.g., known from JP-B-Sho 62-20074.

When such a conventional motorcycle runs a rough road and a rear wheel thereof goes over a bump on the road surface, for example, a unit-swing-type power unit swings about its front. Less vibration is thereby transmitted to one or more of passengers from the power unit during running, which offers improved riding comfort.

Therein, an engine-side suspension linkage is supported by a vehicle frame for free back-and-forth swinging movement about a first support shaft. The engine-side suspension linkage at the lower end has a unit-swing-type power unit supported with a second shaft. The first support shaft and the second support shaft are aligned approximately vertically to allow the unit-swing-type power unit to swing.

Besides, a further motorcycle is disclosed in JP-B-Hei 2-23400. Therein, an engine-side suspension linkage is supported by a vehicle frame for free swinging movement about a vehicle-body-side shaft. The engine-side suspension linkage at the upper end has a unit-swing-type power unit supported with an engine-side support shaft. This allows the unit-swing-type power unit to swing.

Furthermore, document US-A-4324306, which is seen as the closest prior art, discloses a motorcycle having a unit-swing-type power unit with the features of the pre-amble of claim 1.

Each of these known suspension mechanisms which allow the unit-swing-type power units to swing is configured such that the engine-side suspension linkage is supported with the support shafts through cylindrical rubber bushings. No primary vibration and secondary vibration of an engine exerted in different directions can be absorbed in this way, however.

It is, therefore, an object of the invention to provide a motorcycle capable of improving vibration absorbability as well as drivability with a simplified structure.

For a motorcycle of the above kind, this objective is solved in an inventive manner in that at least one end of said engine-side suspension linkage is provided with rubber bushings which are configured to have different spring characteristics in different directions.

In particular, said rubber bushings have soft spring characteristics in the direction along a line connecting said at least one vehicle-body-side shaft and said engine-side shaft and to have hard spring characteristics in that direction perpendicular to said line.

Accordingly, the engine-side suspension linkage is configured to swing in the direction perpendicular to the line which connects the vehicle-body-side shafts and the engine-side shaft. Since the swing direction of the engine-side suspension linkage is identical with the direction of primary vibration of an engine created by its primary inertial force, the primary vibration can be absorbed. On the other hand, the engine-side suspension linkage is configured not to swing in the direction along the line which connects the vehicle-body-side shafts and the engine-side shaft. The engine-side rubber bushings, however, are configured to have soft spring characteristics in that direction so that secondary vibration of the engine is absorbed. Therefore, both the primary vibration created by the primary inertial force and the secondary vibration of the engine can be absorbed with a simplified structure. The engine-side rubber bushings also have hard spring characteristics in the torsional direction of the engine-side suspension linkage, which allows rigidity of the engine-side suspension linkage itself to be increased and drivability to be improved.

Preferably, the engine-side rubber bushings are each formed with weight reducing portions so as to have soft spring characteristics in the direction along the line which connects the preferably two vehicle-body-side shafts and the engine-side shaft and to have hard spring characteristics in the direction perpendicular to the line.

Such a simplified structure provides reduction in the cost of production and weight.

Moreover, according to a further embodiment, said at least one vehicle-body-side shaft comprises a pair of left and right vehicle-body-side shafts supported on the side of said vehicle frame. Thereby, it is preferable that said engine-side shaft is supported to unit-swing-type power unit through rotatable bearing members.

According to a further preferred embodiment, the engine-side rubber bushings are arranged in the lateral direction of the vehicle and/or outwardly of the rotatable bearing members; therefore even harder spring characteristics are provided in the torsional direction of the engine-side suspension linkage. This allows rigidity of the engine-side suspension linkage itself to be increased and drivability to be improved.

According to still another embodiment, the axis of the cylinder of an engine of the unit-swing-type power unit is directed approximately in the same direction as along the line which connects the vehicle-body-side shafts and the engine-side shaft; this causes the secondary vibration of the engine to be reliably absorbed. Therefore, both the primary vibration created by the primary inertial force and the secondary vibration of the engine can be absorbed with a simplified structure.

According to a further preferred embodiment, the axis of the cylinder of the engine of the unit-swing-type power unit is directed approximately in the horizontal direction. This allows the unit-swing-type power unit to be reduced in seated height, thereby providing larger space available under a seat.

Preferably, a compression bar is provided swingably connecting a pivot shaft supported on the said whole frame and said engine-side shaft.

Moreover, preferably the compression bar has one end supported with the pivot shaft through a rubber bushing, and the other end supported with the engine-side shaft through another rubber bushing, the rubber bushings having soft spring characteristics in the direction along the line which connects the pivot shaft and the engine-side shaft and having hard spring characteristics in the direction perpendicular to the line.

Therefore, the primary vibration of the engine created by its primary inertial force can be fully absorbed.

Further preferred embodiments are subject to the subclaims.

In the following, the invention will be explained in greater detail by means of an embodiment thereof with reference to the accompanying drawings, wherein:
- Fig. 1: is a side view of a motorcycle according to the invention;
- Fig. 2: is a side view of a vehicle frame;
- Fig. 3: is a side view of a suspension mechanism;
- Fig. 4: is a sectional view taken along the line IV-IV of Fig. 3;
- Fig. 5: is a sectional view taken along the line V-V of Fig. 3;
- Fig. 6: is a side view of a compression bar;
- Fig. 7: is a side view of an engine-side suspension linkage;
- Fig. 8: is a plan view of the engine-side suspension linkage;
- Fig. 9: is a side view of the region surrounding an engine-side rubber bushing;
- Fig. 10: is a sectional view taken along the line X-X of Fig. 9;
- Fig. 11: is an explanatory drawing of vibration absorbability of a unit-swing-type power unit; and
- Fig. 12: is an explanatory drawing of an arrangement of an engine with the axis of its cylinder directed in the horizontal direction.

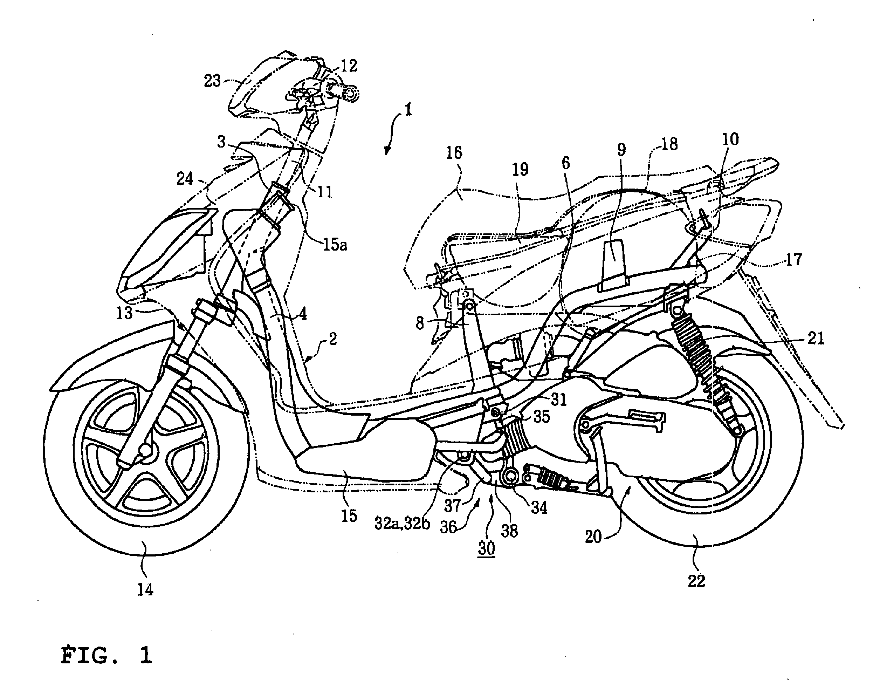

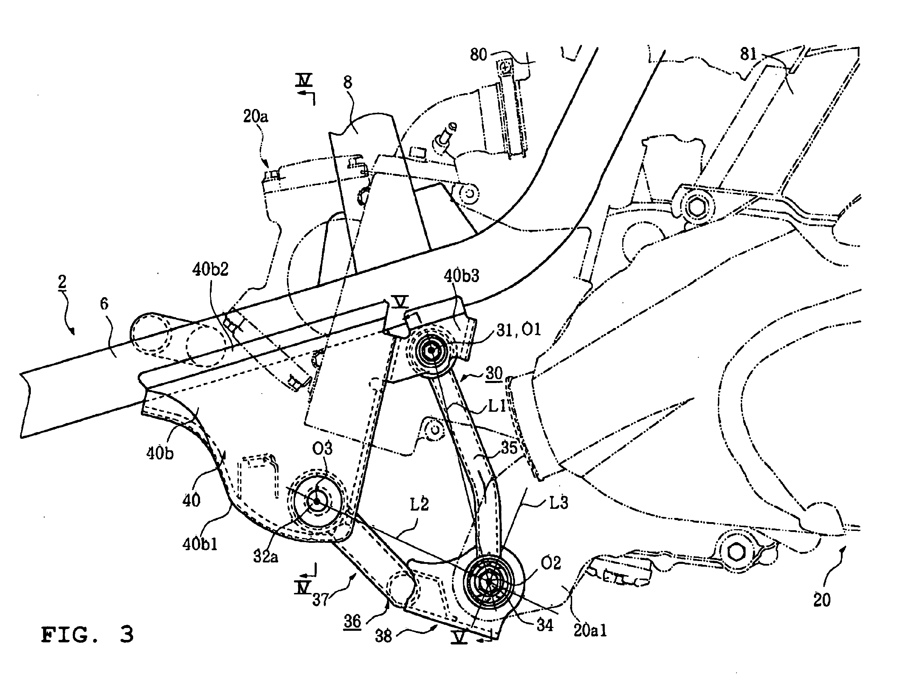

A motorcycle 1 according to an embodiment, preferably being a scooter-type motorcycle, has a vehicle frame 2. As shown in Fig. 1 to Fig. 5, the vehicle frame 2 is made up of a head pipe 3, a single down tube 4 extending down rearward from the head pipe 3, a pair of left and right backstays 6, 7 connected to the down tube 4 through a connecting plate 5 and extending to the rear of the vehicle body, and the like.

A steering shaft 11 is rotatably disposed in the head pipe 3. The steering shaft 11 has handlebars 12 disposed at the upper part and a front fork 13 at the lower part. A front wheel 14 is rotatably supported at a lower part of the front fork 13.

A fuel tank 15 is arranged along the region including the head pipe 3, the down tube 4 and the front side of the left backstay 6. An oil filler port 15a is disposed at the top of the fuel tank 15 and positioned close to the head pipe 3.

The pair of left and right backstays 6, 7 is provided with seat support stays 8 to 10. A seat 16 is supported by the seat support stays 8 to 10. A storage compartment 17 is arranged in a space below the seat 16 to receive helmets 18, 19.

The unit-swing-type power unit 20 at the front side is swingably supported at the front side of the pair of left and right backstays 6, 7 through a suspension mechanism 30. The rear side of the unit-swing-type power unit 20 is supported at the rear side of the pair of left and right backstays 6, 7 through a rear suspension 21. A rear wheel 22 is rotatably supported by the unit-swing-type power unit 20.

The unit-swing-type power unit 20 is integrally formed of an engine 20a and a power transmission mechanism 20b. The unit-swing-type power unit 20 transmits the power of the engine 20a to the rear wheel 22 through the power transmission mechanism 20b.

The handlebars 12 are provided with a headlight cover 23. The head pipe 3, the down tube 4, the pair of left and right backstays 6, 7 and the like configuring the vehicle frame 2 are covered with a vehicle body cover 24.

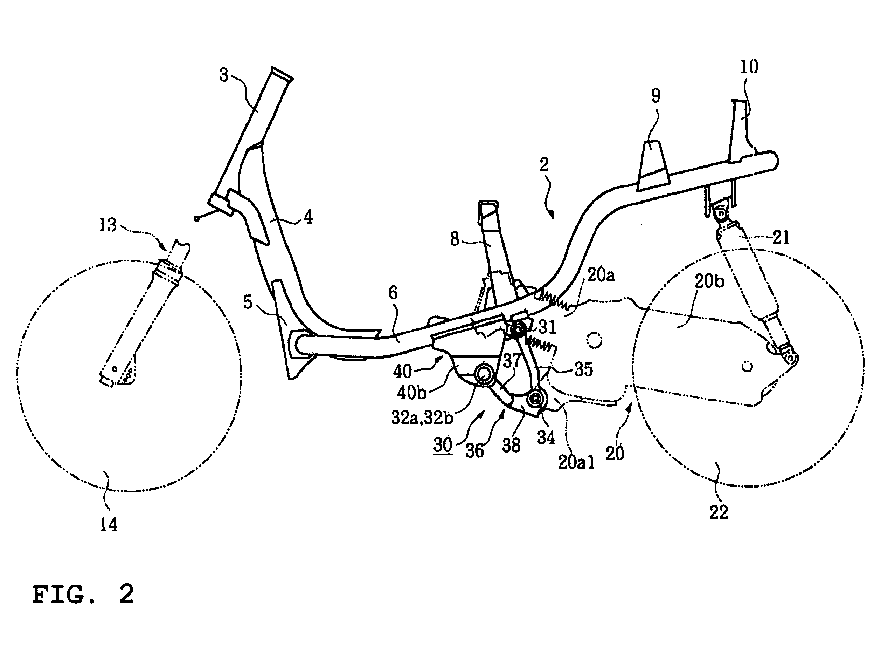

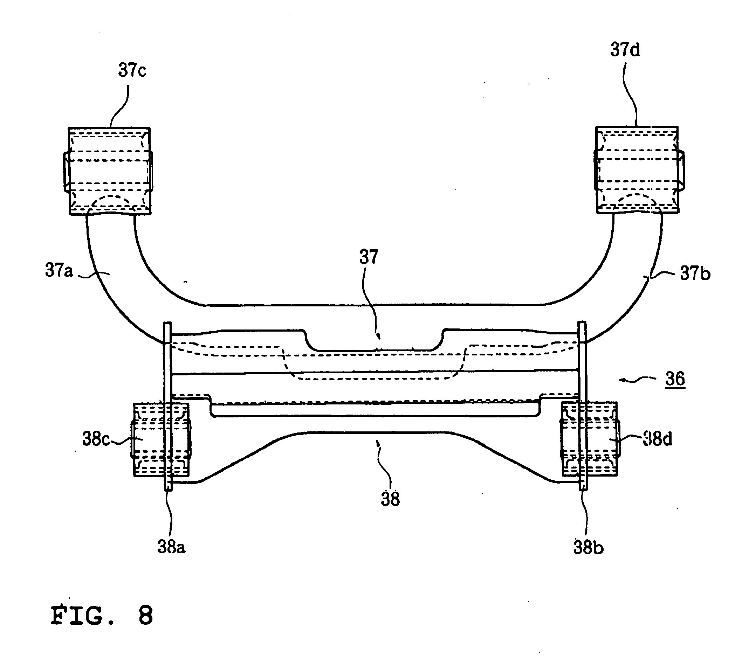

The suspension mechanism 30 for supporting the unit-swing-type power unit 20 at the front portion against the vehicle frame 2 to be swingable is configured as shown in Fig. 2 to Fig. 8.

The suspension mechanism 30 has a pivot shaft 31 supported on the side of the vehicle frame, a pair of left and right vehicle-body-side shafts 32a, 32b supported on the side of the vehicle frame, an engine-side shaft 34 for supporting the unit-swing-type power unit 20 at the engine side through rotatable bearing members 33a, 33b, a compression bar 35 for connecting the pivot shaft 31 and the engine-side shaft 34 to be swingable, and an engine-side suspension linkage 36 for linking the vehicle-body-side shafts 32a, 32b and the engine-side shaft 34.

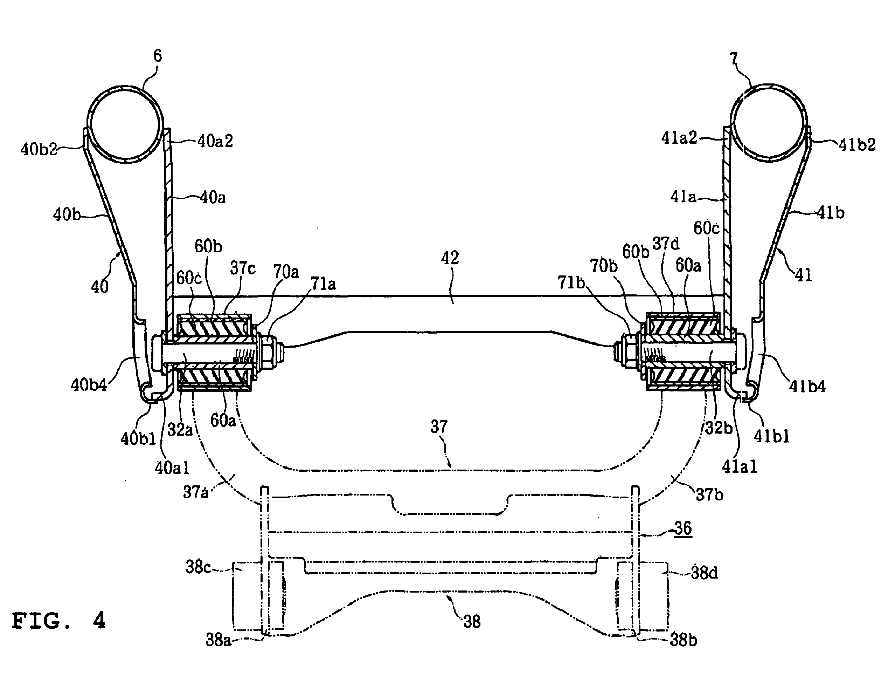

The paired left and right backstays 6, 7 have brackets 40, 41, respectively, fixed to extend downward. The brackets 40, 41 which make a pair are connected together through a cross member 42. As shown in Fig. 4, the bracket 40 is arranged such that an inner plate 40a and an outer plate 40b have bent portions 40a1, 40b1 at the lower edges, respectively, welded together, and unbent mounting portions 40a2, 40b2 at the upper edges, respectively, welded to the backstay 6. As shown in Fig. 4, the bracket 41 is also arranged such that an inner plate 41a and an outer plate 41b have bent portions 41a1, 41 b1 at the lower edges, respectively, welded together, and unbent mounting portions 41 a2, 41 b2 at the upper edges, respectively, welded to the backstay 7.

The inner plate 40a and the outer plate 40b have extended portions 40a3, 40b3 extending rearward, respectively, which are welded to the backstay 6.

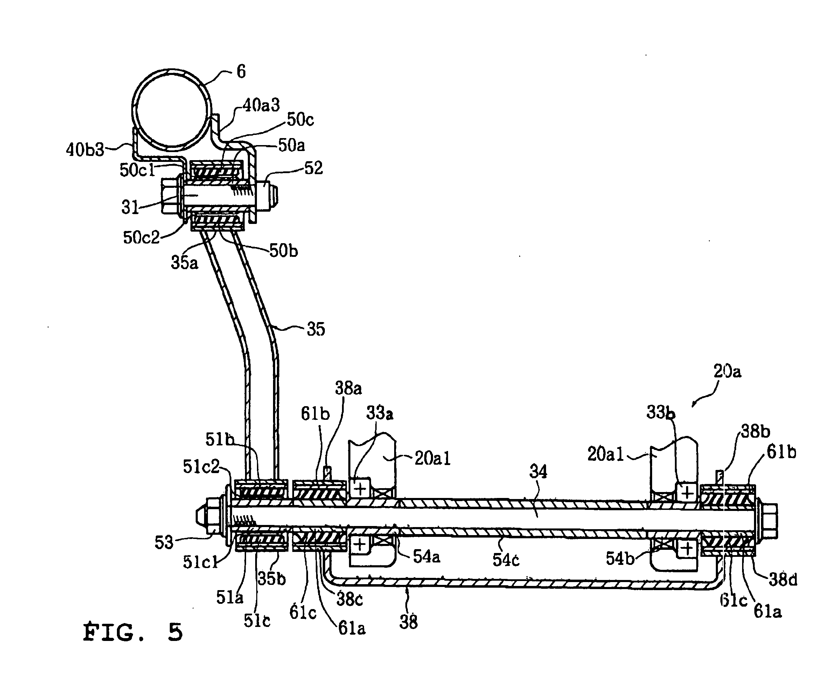

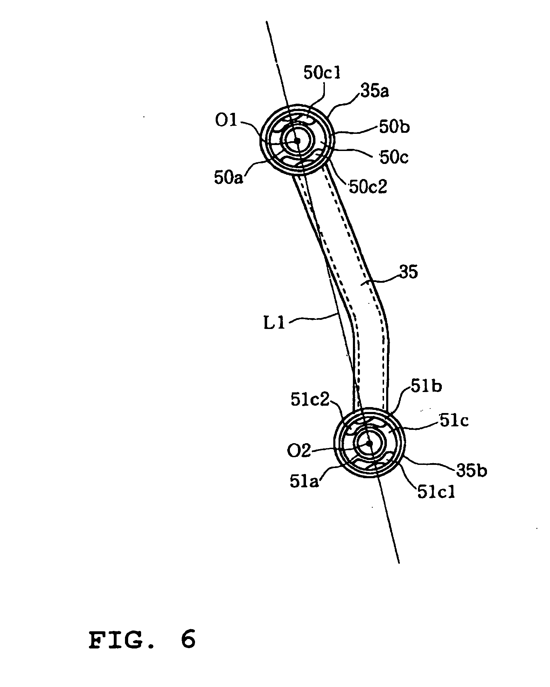

As shown in Fig. 5 and Fig. 6, the compression bar 35 has a cylindrical support portion 35a at one end. The cylindrical support portion 35a has an integral rubber bushing 50c disposed between an inner cylinder 50a and an outer cylinder 50b. The other end of the compression bar 35 is also provided with a cylindrical support portion 35b. The cylindrical support portion 35b also has an integral rubber bushing 51 c disposed between an inner cylinder 51a and an outer cylinder 51 b. The rubber bushings 50c, 51 c are formed with weight reducing portions 50c1, 50c2 and weight reducing portions 51c1, 51 c2, respectively, so as to have soft spring characteristics in the direction along the line L1 which connects the axis O1 of the pivot shaft 31 coaxial with the inner cylinder 50a and the axis 02 of the engine-side shaft 34 coaxial with the inner cylinder 51 a and to have hard spring characteristics in the direction perpendicular to the line L1.

One end of the compression bar 35 is supported with the pivot shaft 31 in such a way that the cylindrical support portion 35a is brought in contact with the extended portions 40a3, 40b3 of the bracket 40, the pivot shaft 31 including bolt sections is inserted in the inner cylinder 50a, and then a nut 52 is fitted on the top end of the pivot shaft 31 and fixedly fastened to the extended portions 40a3, 40b3, as shown in Fig. 5.

The other end of the compression bar 35 is supported with the engine-side shaft 34 in such a way that the inner cylinder 51 a of the cylindrical support portion 35b is inserted on the engine-side shaft 34 including bolt sections and a nut 53 is fitted on the top end of the engine-side shaft 34 and fixedly fastened.

The engine-side shaft 34 is inserted in a crankcase 20a1 of the engine 20a of the unit-swing-type power unit 20 through collars 54a to 54c. The crankcase 20a1 is supported with the engine-side shaft 34 through the rotatable bearing members 33 including ball bearings.

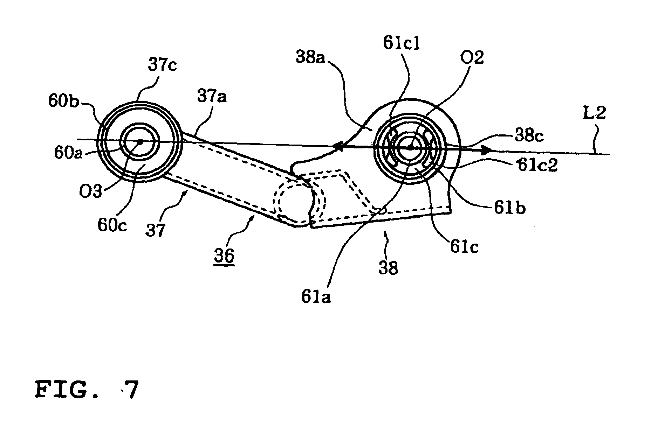

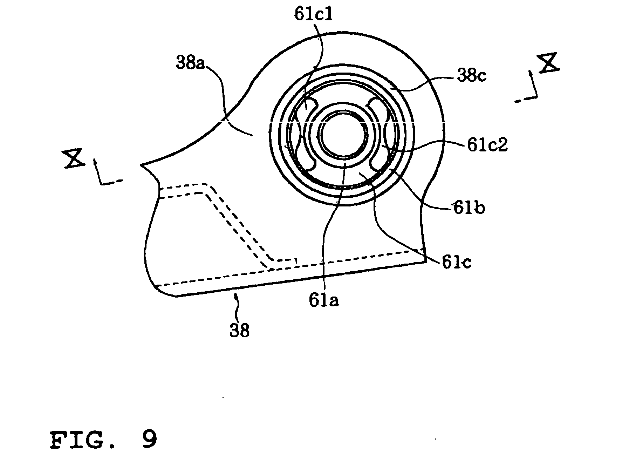

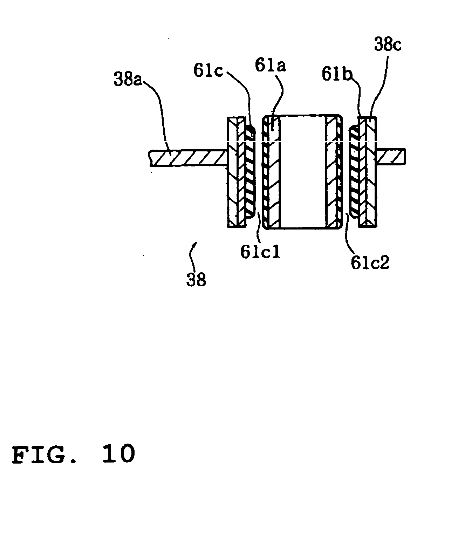

As shown in Fig. 7 to Fig. 10, the engine-side suspension linkage 36 is formed of a vehicle-body-side linkage 37 and an engine-side linkage 38 welded together. The vehicle-body-side linkage 37 including left and right support arm portions 37a, 37b is formed in a U-shape as viewed in plan view. The engine-side linkage 38 has the left and right sides bent and raised to form support portions 38a, 38b.

The left and right support arm portions 37a, 37b of the vehicle-body-side linkage 37 are welded to cylindrical support portions 37c, 37d respectively. Each of the cylindrical support portions 37c, 37d has an integral vehicle-body-side rubber bushing 60c disposed between an inner cylinder 60a and an outer cylinder 60b. The vehicle-body-side rubber bushing 60c is of a cylindrical shape and has the same spring characteristics in every direction and elasticity in the torsional direction of its axis.

The support portions 38a, 38b of the engine-side linkage 38 are welded to cylindrical support portions 38c, 38d respectively. Each of the cylindrical support portions 38c, 38d has an integral engine-side rubber bushing 61 c disposed between an inner cylinder 61 a and an outer cylinder 61 b. The engine-side rubber bushing 61 c is formed with weight reducing portions 61c1, 61 c2 so as to have soft spring characteristics in the direction along the line L2 which connects the axis 03 of the vehicle-body-side shafts 32a, 32b coaxial with the cylindrical support portions 37c, 37d of the vehicle-body-side linkage 37 and the axis 02 of the engine-side shaft 34 coaxial with the cylindrical support portions 38c, 38d of the engine-side linkage 38 and to have hard spring characteristics in the direction perpendicular to the line L2.

To mount the engine-side suspension linkage 36, the cylindrical support portions 37c, 37d of the vehicle-body-side linkage 37 are first brought in contact with the bracket 40 and the bracket 41, respectively, as shown in Fig. 4 and Fig. 5. The vehicle-body side shaft 32a is then inserted in the inner plate 40a, and the inner cylinder 60a of the cylindrical support portion 37c from a mounting hole 40b4 of the bracket 40. A nut 71 a is fixedly fastened to the top end of the vehicle-body side shaft 32a through a washer 70a. Similarly, the vehicle-body side shaft 32b is inserted in the inner plate 41 a, and the inner cylinder 60a of the cylindrical support portion 37d from a mounting hole 41 b4 of the bracket 41. A nut 71 b is then fixedly fastened to the top end of the vehicle-body side shaft 32b through a washer 70b.

Next, the cylindrical support portions 38c, 38d of the engine-side linkage 38 are brought in contact with the outer sides of the crankcase 20a1. The engine-side shaft 34 is inserted from the right side of the crankcase 20a1, that is, the side of the cylindrical support portion 38d in the inner cylinder 61 a of the cylindrical support portion 38d, the collars 54b, 54c, 54a, and the inner cylinder 61a of the cylindrical support portion 38c. Then, the inner cylinder 51 a of the cylindrical support portion 35b of the compression bar 35 is inserted on the top end of the engine-side shaft 34, and a nut 53 is fixedly fastened thereto.

As described in the foregoing, the vehicle-body-side linkage 37, that is, one end of the engine-side suspension linkage 36 is supported with the vehicle-body-side shafts 32a, 32b through the vehicle-body-side rubber bushings 60c, 60c having elasticity in the torsional direction of their axes. The engine-side linkage 38, that is, the other end of the engine-side suspension linkage 36 is supported with the engine-side shaft 34 through the engine-side rubber bushings 61 c, 61 c having elasticity. The engine-side rubber bushings 61 c, 61 c are configured to have soft spring characteristics in the direction along the line L2 which connects the vehicle-body-side shafts 32a, 32b and the engine-side shaft 34 and to have hard spring characteristics in the direction along the line L3 perpendicular to the line L2.

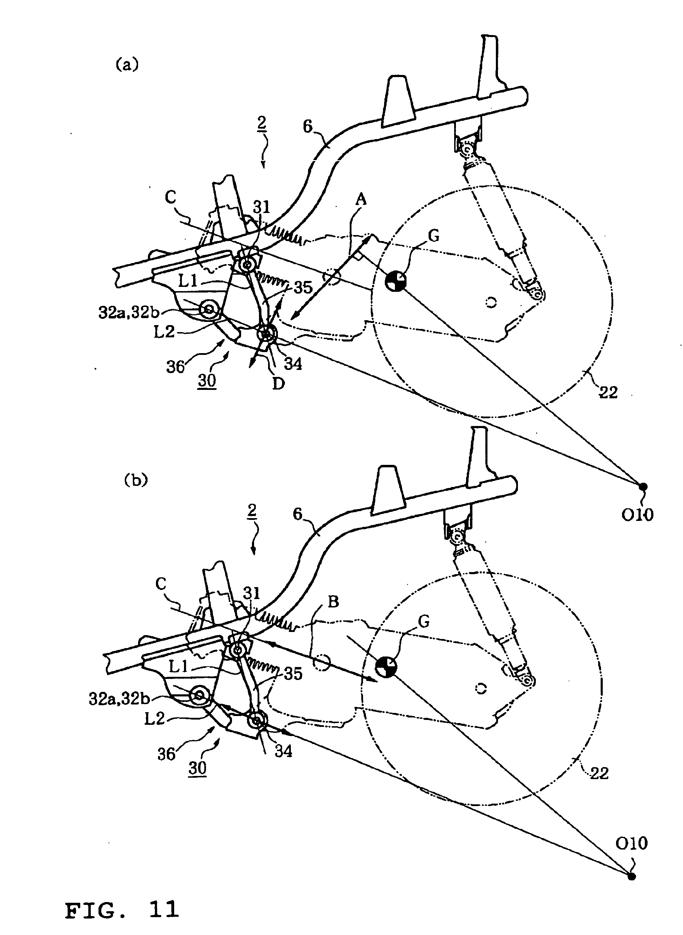

Therefore, as shown in Fig. 11, the axis C of a cylinder of the engine 20a of the unit-swing-type power unit 20 is directed approximately in the horizontal direction, which is approximately the same direction as along the line L2 connecting the vehicle-body-side shafts 32a, 32b and the engine-side shaft 34.

Assuming that the instantaneous center of rotation of the engine 20a is O10 and the center of gravity of the engine 20a is G, primary vibration of the engine 20a created by its primary inertial force is exerted in the direction A, and secondary vibration in the direction B.

When the scooter-type motorcycle 1 runs a rough road and the rear wheel 22 goes over a bump on the road surface, for example, the unit-swing-type power unit 20 swings about its front. The engine-side suspension linkage 36 swings about the vehicle-body-side shafts 32a, 32b. The swing direction of the engine-side suspension linkage 36 is the direction D perpendicular to the line L2 which connects the vehicle-body-side shafts 32a, 32b and the engine-side shaft 34. Since the swing direction D is approximately identical with the direction of the primary vibration of the engine 20a created by its primary inertial force, the primary vibration can be absorbed (Fig. 11 (a)).

The engine-side suspension linkage 36 is configured to swing in the direction along the line L2 which connects the vehicle-body-side shafts 32a, 32b and the engine-side shaft 34. The engine-side rubber bushings 61c, 61c, however, are configured to have soft spring characteristics in that direction so that the secondary vibration of the engine 20a is absorbed (Fig. 11 (b)). Therefore, both the primary vibration created by the primary inertial force and the secondary vibration of the engine can be absorbed with a simplified structure.

The engine-side rubber bushings 61 c, 61 c also have hard spring characteristics in the torsional direction of the engine-side suspension linkage 36, which allows rigidity of the engine-side suspension linkage itself to be increased and drivability to be improved.

The engine-side rubber bushings 61c, 61c are each formed with the weight reducing portions so as to have soft spring characteristics in the direction along the line L2 which connects the vehicle-body-side shafts 32a, 32b and the engine-side shaft 34 and to have hard spring characteristics in the direction perpendicular to the line L2. Such a simplified structure provides reduction in the cost of production and weight.

Since the engine-side rubber bushings 61 c, 61c are arranged in the lateral direction of the vehicle and outwardly of the rotatable bearing members 33, 33, the engine-side rubber bushing 61 c and the engine-side rubber bushing 61 c are separated far apart from each other. Therefore, even harder spring characteristics are provided in the torsional direction of the engine-side suspension linkage 36. This allows rigidity of the engine-side suspension linkage itself to be increased and drivability to be improved.

Since the axis C of the cylinder of the engine 20a of the unit-swing-type power unit 20 is directed approximately in the same direction as along the line L2 which connects the vehicle-body-side shafts 32a, 32b and the engine-side shaft 34, the secondary vibration of the engine 20a can be reliably absorbed.

The compression bar 35 has one end supported with the pivot shaft 31 through the rubber bushing 50c, and the other end supported with the engine-side shaft 34 through the rubber bushing 51 c. The rubber bushings 50c, 51 c have soft spring characteristics in the direction along the line L1 which connects the pivot shaft 31 and the engine-side shaft 34 while having hard spring characteristics in the direction perpendicular to the line L1. Therefore, the primary vibration of the engine 20a created by its primary inertial force can be fully absorbed (Fig. 11 (a)).

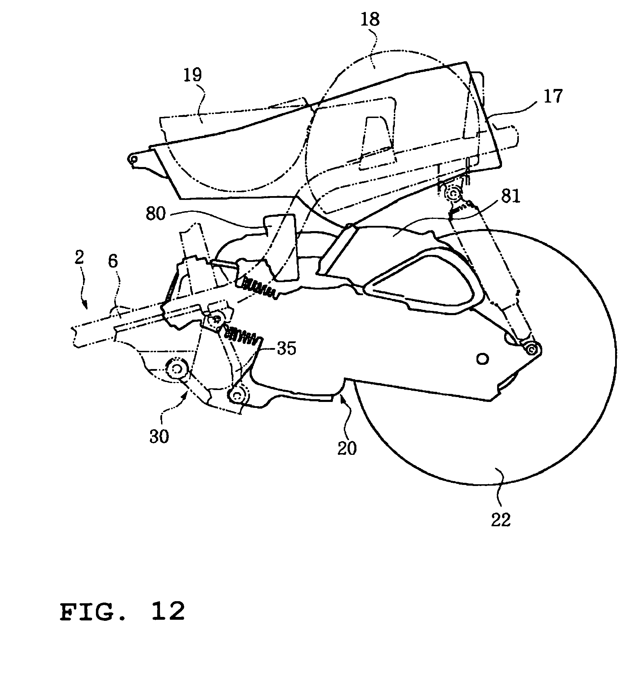

In the present embodiment, the axis C of the cylinder of the engine 20a of the unit-swing-type power unit 20 is directed approximately in the horizontal direction, as shown in Fig. 12. This allows the unit-swing-type power unit 20 to be reduced in height, thereby providing larger space available under the seat for the arrangement of a carburetor 80 and an air cleaner 81.

As discussed in the foregoing, the engine-side suspension linkage is configured to swing in the direction perpendicular to the line which connects the vehicle-body-side shafts and the engine-side shaft. Since the swing direction of the engine-side suspension linkage is identical with the direction of vibration of the engine created by its primary inertial force, the vibration can be absorbed. On the other hand, the engine-side suspension linkage is configured not to swing in the direction along the line which connects the vehicle-body-side shafts and the engine-side shaft. The engine-side rubber bushings, however, are configured to have soft spring characteristics in that direction so that the secondary vibration of the engine is absorbed. Therefore, both the primary vibration created by the primary inertial force and the secondary vibration of the engine can be absorbed with a simplified structure. The engine-side rubber bushings also have hard spring characteristics in the torsional direction of the engine-side suspension linkage, which allows rigidity of the engine-side suspension linkage itself to be increased and drivability to be improved.

Further, the engine-side rubber bushings are each formed with the weight reducing portions so as to have soft spring characteristics in the direction along the line which connects the vehicle-body-side shafts and the engine-side shaft and to have hard spring characteristics in the direction perpendicular to the line. Such a simplified structure provides reduction in the cost of production and weight.

Since the engine-side rubber bushings are arranged in the lateral direction of the vehicle and outwardly of the rotatable bearing members, even harder spring characteristics are provided in the torsional direction of the engine-side suspension linkage. This allows rigidity of the engine-side suspension linkage itself to be increased and drivability to be improved.

Furthermore, since the axis of the cylinder of the engine of the unit-swing-type power unit is directed approximately in the same direction as along the line which connects the vehicle-body-side shafts and the engine-side shaft, the secondary vibration of the engine is reliably absorbed. Therefore, both the primary vibration created by the primary inertial force and the secondary vibration of the engine can be absorbed with a simplified structure.

Advantageously, the axis of the cylinder of the engine of the unit-swing-type power unit is directed approximately in the horizontal direction. This allows the unit-swing-type power unit to be reduced in seated height, thereby providing larger space available under the seat.

Moreover, preferably the compression bar has one end supported with the pivot shaft through the rubber bushing, and the other end supported with the engine-side shaft through another rubber bushing. The rubber bushings have soft spring characteristics in the direction along the line which connects the pivot shaft and the engine-side shaft while having hard spring characteristics in the direction perpendicular to the line. Therefore, the primary vibration of the engine created by its primary inertial force can be fully absorbed.

As described above, in order to improve vibration absorbability as well as drivability with a simplified structure, a motorcycle, preferably being a scooter-type motorcycle 1 is proposed having a unit-swing-type power unit 20 supported at the front portion by a vehicle frame 2 to be swingable, the motorcycle comprising: a pivot shaft 31 supported on the side of the vehicle frame 2; a pair of left and right vehicle-body-side shafts 32a, 32b supported on the side of the vehicle frame 2; an engine-side shaft 34 for supporting the unit-swing-type power unit 20 at the side of an engine 20a through rotatable bearing members 33, 33; a compression bar 35 for connecting the pivot shaft 31 and the engine-side shaft 34 to be swingable; and an engine-side suspension linkage 36 for linking the vehicle-body-side shafts 32a, 32b and the engine-side shaft 34, wherein one end of the engine-side suspension linkage 36 is supported with the vehicle-body-side shafts 32a, 32b through vehicle-body-side rubber bushings 60c, 60c having elasticity in the torsional direction of their axes, and the other end of the engine-side suspension linkage 36 is supported with the engine-side shaft 34 through engine-side rubber bushings 61 c, 61 c having elasticity, and wherein the engine-side rubber bushings 61 c, 61c are configured to have soft spring characteristics in the direction along the line L2 which connects the vehicle-body-side shafts 32a, 32b and the engine-side shaft 34 and to have hard spring characteristics in the direction perpendicular to the line L2.

## Claims

1. Motorcycle having a unit-swing-type power unit (20) swingably supported at its front portion by a vehicle frame (2), said motorcycle comprising:
at least a vehicle-body-side shaft (32a,32b) supported on the side of said vehicle frame (2);
an engine-side shaft (34) supported on said unit-swing-type power unit (20); and
an engine side suspension linkage (36) for linking said at least one vehicle-body-side shaft (32a,32b) and said engine-side shaft (34);
**characterized in that**
at least one end of said engine-side suspension linkage (36) is provided with rubber bushings (60c,61c), which are configured to have different spring characteristics in different directions, wherein said rubber bushings (61 c) have soft spring characteristics in the direction along a line (L2) connecting said at least one vehicle-body-side shaft (32a,32b) and said engine-side shaft (34) and to have hard spring characteristics **in that** direction perpendicular to said line (L2).

2. Motorcycle according to claim 1, **characterized in that** said rubber bushings (61 c) are each formed with weight reducing portions (61c1,61c2) so as to have soft spring characteristics in the direction along the line (L2) which connects said vehicle-body-side shafts (32a,32b) and said engine-side shaft (34) and to have hard spring characteristics in the direction perpendicular to said line (L2).

3. Motorcycle according to at least one of the claims 1 to 2, **characterized in that** said at least one vehicle-body-side shaft comprises a pair of left and right vehicle-body-side shafts (32a,32b) supported on the side of said vehicle frame (2).

4. Motorcycle according to at least one of the claims 1 to 3, **characterized in that** said engine-side shaft (34) is supported to unit-swing-type power unit (20) through rotatable bearing members (33a,33b).

5. Motorcycle according to at least one of the claims 1 to 4, **characterized in that** both ends of said engine-side suspension linkage (36) are provided with their respective shafts (32a,32b,34) through rubber bushings having elasticity, in particular at least in the torsional direction of their axes.

6. Motorcycle according to at least one of the claims 1 to 5, **characterized in that** said engine-side rubber bushings (61c) are arranged in the lateral direction of the vehicle (1) and/or outwardly of said rotatable bearing members (33a,33b).

7. Motorcycle according to at least one of the claims 1 to 6, **characterized in that** the axis (C) of a cylinder of an engine (20a) of said unit-swing-type power unit (20) is directed approximately in the same direction as along the line (L2) which connects said vehicle-body-side shafts (32a,32b) and said engine-side shaft (34).

8. Motorcycle according to at least one of the claims 1 to 7, **characterized in that** the axis (C) of a cylinder of said engine (20a) of said unit-swing-type power unit (20) is directed approximately in the horizontal direction.

9. Motorcycle according to at least one of the claims 1 to 8, **characterized in that** a compression bar (35) is provided swingably connecting a pivot shaft (31) supported on the said whole frame (2) and said engine-side shaft (34).

10. Motorcycle according to claim 9, **characterized in that** said compression bar (35) has one end supported with said pivot shaft (31) through a rubber bushing (50c), and the other end supported with said engine-side shaft (34) through another rubber bushing (51c).

11. Motorcycle according to claim 10, **characterized in that** said rubber bushings (50c,51c) have soft spring characteristics in the direction along a line (L1) which connects said pivot shaft (31) and said engine-side shaft (34) and have hard spring characteristics in a direction perpendicular to said line (L2).

## Patentansprüche

1. Motorrad mit einer Antriebseinheit (20) vom Schwingeinheits- Typ, schwingbar gelagert an seinem vorderen Abschnitt durch einen Fahrzeugrahmen (2), wobei das Motorrad aufweist:
zumindest eine fahrzeugkarosserieseitige Welle der (32a, 32b), gelagert auf der Seite des Fahrzeugrahmens (2);
eine motorseitige Welle (34), gelagert an der Antriebseinheit (20) vom Schwingeinheits- Typ; und eine motorseitige Aufhängungsverbindung (36) zum Verbinden der zumindest einen fahrzeugkarosserieseitigen Welle (32a, 32b) und der motorseitigen Welle (34);
**dadurch gekennzeichnet, dass**
zumindest ein Ende der motorseitigen Aufhängungsverbindung (36) mit Gummihülsen (60c, 61 c) versehen ist, die konfiguriert sind, um unterschiedliche Federcharakteristika in verschiedenen Richtungen zu haben, wobei die Gummihülsen (61 c) weiche Federcharakteristika in der Richtung entlang einer Linie (L2) haben, die die zumindest fahrzeugkarosserieseitige Welle (32a, 32b) und die motorseitige Welle (34) verbindet und harte Federcharakteristika in der Richtung haben, die rechtwinklig zu der Linie (L2) ist.

2. Motorrad nach Anspruch 1, **dadurch gekennzeichnet, dass** die Gummiauskleidungen (61 c) jeweils mit gewichtsreduzierenden Abschnitten (61 c1, 61 c2) ausgebildet sind, um weiche Federcharakteristika in der Richtung entlang der Linie (L2) zu haben, die die fahrzeugkarosserieseitige Welle (32a, 32b) und die motorseitige Welle (34) verbindet, und um harte Federcharakteristika in der Richtung rechtwinklig zu der Linie (2) zu haben.

3. Motorrad nach zumindest einem der Ansprüche 1 bis 2, **dadurch gekennzeichnet, dass** die zumindest eine fahrzeugkarosserieseitige Welle ein Paar von linken und rechten fahrzeugkarosserieseitigen Wellen (32a, 32b) aufweist, gelagert auf Seiten des Fahrzeugrahmens.

4. Motorrad nach zumindest einem der Ansprüche 1 bis 3, **dadurch gekennzeichnet, dass** die motorseitige Welle (34) an der Antriebseinheit (20) vom Schwingeinheits-Typ durch drehbare Lagerteile (33a, 33b) gelagert ist.

5. Motorrad nach zumindest einem der Ansprüche 1 bis 4, **dadurch gekennzeichnet, dass** beide Enden der motorseitigen Aufhängungsverbindung (36) mit ihren jeweiligen Wellen (32a, 32b, 34) durch Gummihülsen, die elastisch sind, versehen sind, insbesondere zumindest in der Torsionsrichtung ihrer Achsen.

6. Motorrad nach zumindest einem der Ansprüche 1 bis 5, **dadurch gekennzeichnet, dass** die motorseitigen Gummihülsen (61c) in der seitlichen Richtung des Fahrzeuges (1) und / oder nach außen der drehbaren Lagerteile (33a, 33b) angeordnet sind.

7. Motorrad nach zumindest einem der Ansprüche 1 bis 6, **dadurch gekennzeichnet, dass** die Achse (C) eines Zylinders eines Motors (20a) der Antriebseinheit (20) vom Schwingeinheits- Typ ungefähr in derselben Richtung wie entlang der Linie (L2) gerichtet ist, die die fahrzeugkarosserieseitigen Wellen (32a, 32b) und die motorseitige Welle (34) verbindet.

8. Motorrad nach zumindest einem der Ansprüche 1 bis 7, **dadurch gekennzeichnet, dass** die Achse (C) eines Zylinders des Motors (20a) der Antriebseinheit (20) vom Schwingeinheits- Typ ungefähr in der horizontalen Richtung gerichtet ist.

9. Motorrad nach zumindest einem der Ansprüche 1 bis 8, **dadurch gekennzeichnet, dass** ein Kompressionsstab (35) vorgesehen ist, der schwingbar eine Schwenkwelle (31), gelagert auf der Seite des ganzen Rahmens (2), und die motorseitige Welle (34) verbindet.

10. Motorrad nach Anspruch 9, **dadurch gekennzeichnet, dass** der Kompressionsstab (35) ein Ende hat, gelagert mit der Schwenkwelle (31) durch eine Gummihülse (50c), und das andere Ende, gelagert mit der motorseitigen Welle (34) durch eine weitere Gummihülse (51 c).

11. Motorrad nach Anspruch 10, **dadurch gekennzeichnet, dass** die Gummiauskleidungen (50c, 51 c) weiche Federcharakteristika in der Richtung entlang einer Linie (L1) haben, die die Schwenkwelle (31) und die motorseitige Welle (34) verbindet und harte Federcharakteristika in einer Richtung rechtwinklig zu der Linie (L2) haben.

## Revendications

1. Motocyclette comportant un groupe moteur du type à unité oscillante (20) supportée, de manière oscillante, à sa partie avant par un châssis de véhicule (2), ladite motocyclette comprenant :
au moins un arbre côté carrosserie de véhicule (32a, 32b) supporté sur le côté dudit châssis de véhicule (2) ;
un arbre côté moteur (34) supporté sur ledit groupe moteur du type à unité oscillante (20) ; et
une tringlerie de suspension côté moteur (36) pour relier ledit au moins un arbre côté carrosserie de véhicule (32a, 32b) et ledit arbre côté moteur (34) ;
**caractérisée en ce**
**qu'**au moins une extrémité de ladite tringlerie de suspension côté moteur (36) est pourvue de douilles en caoutchouc (60c, 61c) qui sont configurées pour présenter différentes caractéristiques d'élasticité suivant différentes directions, dans laquelle lesdites douilles en caoutchouc (61c) présentent des caractéristiques d'élasticité molles suivant la direction le long d'une ligne (L2) reliant ledit au moins un arbre côté carrosserie de véhicule (32a, 32b) et ledit arbre du côté moteur (34), et présentent des caractéristiques d'élasticité dures suivant cette direction perpendiculaire à ladite ligne (L2).

2. Motocyclette selon la revendication 1, **caractérisée en ce que** lesdites douilles en caoutchouc (61c) sont formées chacune de parties de réduction de poids (61c1, 61c2) de manière à présenter des caractéristiques d'élasticité molles suivant la direction le long de la ligne (L2) qui relie lesdits arbres côté carrosserie de véhicule (32a, 32b) et ledit arbre côté moteur (34), et à présenter des caractéristiques d'élasticité dures suivant la direction perpendiculaire à ladite ligne (L2).

3. Motocyclette selon au moins l'une des revendications 1 à 2, **caractérisée en ce que** ledit au moins un arbre côté carrosserie de véhicule (32a, 32b) comprend une paire d'arbres côté carrosserie de véhicule gauche et droit (32a, 32b) supportés sur le côté dudit châssis de véhicule (2).

4. Motocyclette selon au moins l'une des revendications 1 à 3, **caractérisée en ce que** ledit arbre côté moteur (34) est supporté par le groupe moteur du type à unité oscillante (20) par l'intermédiaire d'éléments formant paliers tournants (33a, 33b).

5. Motocyclette selon au moins l'une des revendications 1 à 4, **caractérisée en ce que** les deux extrémités de ladite tringlerie de suspension côté moteur (36) sont pourvues de leur arbre respectif (32a, 32b, 34) par l'intermédiaire de douilles en caoutchouc présentant une élasticité, en particulier au moins suivant la direction de torsion de leurs axes.

6. Motocyclette selon au moins l'une des revendications 1 à 5, **caractérisée en ce que** lesdites douilles en caoutchouc côté moteur (61c) sont agencées suivant la direction latérale du véhicule (1) et/ou vers l'extérieur desdits éléments formant paliers tournants (33a, 33b).

7. Motocyclette selon au moins l'une des revendications 1 à 6, **caractérisée en ce que** l'axe (C) d'un cylindre d'un moteur (20a) dudit groupe moteur du type à unité oscillante (20) est orienté approximativement suivant la même direction que le long de la ligne (L2) qui relie lesdits arbres côté carrosserie de véhicule (32a, 32b) et ledit arbre côté moteur (34).

8. Motocyclette selon au moins l'une des revendications 1 à 7, **caractérisée en ce que** l'axe (C) d'un cylindre dudit moteur (20a) dudit groupe moteur du type à unité oscillante (20) est orienté approximativement suivant la direction horizontale.

9. Motocyclette selon au moins l'une des revendications 1 à 8, **caractérisée en ce qu'**il est prévu une barre de compression (35) reliant, de manière oscillante, un arbre pivot (31) supporté sur ledit châssis complet (2) et ledit arbre côté moteur (34).

10. Motocyclette selon la revendication 9, **caractérisée en ce que** ladite barre de compression (35) comporte une extrémité supportée par ledit arbre pivot (31) par l'intermédiaire d'une douille en caoutchouc (50c), et l'autre extrémité supportée par ledit arbre côté moteur (34) par l'intermédiaire d'une autre douille en caoutchouc (51c).

11. Motocyclette selon la revendication 10, **caractérisée en ce que** lesdites douilles en caoutchouc (50c, 51c) présentent des caractéristiques d'élasticité molles suivant la direction le long d'une ligne (L1) qui relie ledit arbre pivot (31) et ledit arbre côté moteur (34), et présentent des caractéristiques d'élasticité dures suivant une direction perpendiculaire à ladite ligne (L2).
